Europäisches Patentamt

European Patent Office

Office européen des brevets

(11) Veröffentlichungsnummer: **0 252 390 B1**

## (12) EUROPÄISCHE PATENTSCHRIFT

(51) Int. Cl.⁵: **C09D 11/10**, D06P 5/00

(45) Veröffentlichungstag der Patentschrift: **22.01.92**

(21) Anmeldenummer: **87109256.5**

(22) Anmeldetag: **26.06.87**

---

(54) **Bindemittel für den Transferdruck.**

---

(30) Priorität: **05.07.86 DE 3622602**

(43) Veröffentlichungstag der Anmeldung:
**13.01.88 Patentblatt 88/02**

(45) Bekanntmachung des Hinweises auf die
Patenterteilung:
**22.01.92 Patentblatt 92/04**

(84) Benannte Vertragsstaaten:
**AT BE CH DE ES FR GB IT LI NL SE**

(56) Entgegenhaltungen:
**DE-A- 2 525 856**

**CHEMICAL ABSTRACTS, Band 94, Nr. 22, 31.
Mai 1979, Zusammenfassung Nr. 176630k,
Columbus, Ohio, US; && RO-A-66 033
(INTREPRINDEREA DE FIBRE SINTETICE, SA-
VINESTI) 13-11-1975**

(73) Patentinhaber: **BASF Aktiengesellschaft
Carl-Bosch-Strasse 38
W-6700 Ludwigshafen(DE)**

(72) Erfinder: **Uhl, Guenter
Pfrimmanlage 55
W-6520 Worms 1(DE)**
Erfinder: **Toex, Rudolf
Mannheimer Strasse 25
W-6703 Limburgerhof(DE)**
Erfinder: **Schroeder, Gerd, Dr.
Hardenburgstrasse 6
W-6703 Limburgerhof(DE)**
Erfinder: **Schnell, Klaus
Soldgasse 8
W-6707 Schifferstadt(DE)**

---

EP 0 252 390 B1

**Beschreibung**

Die Erfindung betrifft Bindemittel für den Transferdruck, ihre Verwendung für den Transferdruck und diese enthaltende Drucktinten und Druckpasten.

Im Thermoumdruckverfahren, auch Transferdruck genannt, werden Papiere mit Farbstoffen bedruckt, die durch Hitze und Kontakt auf das gewünschte Substrat sublimieren. Nach dem Drucken und Trocknen werden die bedruckten Papiere zwischengelagert und bei Bedarf werden mit Hilfe von Transferkalandern, mit Thermo- oder Umdruckpressen, z.T. unter vermindertem Druck, die Farbstoffe auf das Substrat transferiert.

Die Transferkalander bestehen aus einem beheizten Zylinder und einem endlosen um die Trommel laufenden Band. Unter leichtem Druck führt man das bedruckte Transferpapier mit dem zu bedruckenden Substrat zwischen Zylinder und Band hindurch. Bei den Umdruckpressen werden Papiere und Substrat zwischen einer beheizten Fläche und dem Pressentisch umgedruckt. Die Temperaturen der Zylinder bzw. der beheizten Flächen betragen zweckmäßig 170-250 ° C, vorzugsweise 190-225 ° C. Unter diesen Bedingungen sublimieren die Farbstoffe vom Transferpapier auf das Substrat.

Die für das Thermoumdruckverfahren geeigneten Farbstoffe sind aus der Literatur bekannt. Es sind dies vor allem schwer- bis unlösliche Dispersionsfarbstoffe aus verschiedenen Farbstoffklassen, wie z.B. Aminoketonfarbstoffe, Ketoniminfarbstoffe, Nitrofarbstoffe, Methinfarbstoffe, Nitrodiphenylaminfarbstoffe, Chinolinfarbstoffe, Aminonaphtochinonfarbstoffe, Cumarinfarbstoffe und Azofarbstoffe, wie Mono- und Disazofarbstoffe.

Außerdem kommen Küpenfarbstoffe in Betracht. Hierzu gehören z.B. Indigoide Farbstoffe oder Anthrachinonküpenfarbstoffe, wozu auch die Anthrimide, Anthrachinonacridone, Anthrachinonthiazole sowie Anthrachinonylazine sowie Derivate von kondensierten Ringsystemen gehören, wie Naphtalinfarbstoffe, Perylenfarbstoffe, verschwefelte Carbazole und Chinonfarbstoffe.

Wird im Thermoumdruckverfahren ohne Vakuum gearbeitet, kommen in der Regel Farbstoffe zum Einsatz mit Molgewichten von 180 bis 400, vorzugsweise 200-400. Arbeitet man mit Vakuum, beispielsweise bei 100 bis 130 mbar, können ebenso höhermolekulare Farbstoffe transferiert werden.

Geeignet für das Umdruckverfahren sind auch optische Aufheller, wie z.B. Naphthalimid-Derivate der Stilbendisulfonsäure oder Styrol-Benzol--Derivate.

Das Bedrucken der Transferpapieren selbst erfolgt zum Teil auf schnelllaufenden Papierdruckmaschinen im Tiefdruck- und Flexodruckverfahren. Dabei ist es wegen der hohen Druckgeschwindigkeiten notwendig, mit niedrigviskosen Drucktinten zu arbeiten. Erforderlich sind hierzu Viskositäten von im Durchschnitt 15 bis 25 sec. Auslaufzeit, gemessen mit einer 4 mm Düse im DIN-Becher bei 23 ° C. Um eine schnelle Trocknung zu erreichen, sind die Drucktinten meist auf Basis organischer Lösungsmittel aufgebaut.

Bedruckt man Papiere auf konventionellen Textildruckmaschinen im Rouleauxdruck, Rotations- oder Flachfilmdruck, wird mit deutlich niedrigeren Druckgeschwindigkeiten, durchschnittlich mit 20-80 m/min, gearbeitet. Die Trocknung der bedruckten Papiere erfolgt, je nach Maschinentyp, während 30 sec. bis 1 1/2 min bei Temperaturen von 80-120 ° C. Für den Druck verwendet man hier keine Lösungsmittel-haltigen Drucktinten, sondern wäßrige Druckpasten mit Viskositäten, die vorzugsweise zwischen 2-8 Pa.s eingestellt sind.

In der Praxis enthalten die verwendeten Drucktinten und Druckpasten außer dem Farbstoff ein Bindemittel zum Abbinden der Farbstoffe auf den Transferdruckpapieren und die üblichen Zusätze und Hilfsmittel.

Die im Tief- und Flexodruckverfahren in der Regel verwendeten und bekannten Bindemittel sind mit Wasser nicht verträglich. Es sind dies z.B. Kolophonium, aromatische Kohlenwasserstoffharze, Polyvinylacetat oder Polyvinylbutyral. Das Lösen dieser Produkte ist zeitraubend und in Wasser aufbereitete Farbstoffteige können nicht oder nur in untergeordneten Mengen mitverwendet werden. Sie müssen wasserfrei sein und werden meist bei der Herstellung der Drucktinten mit eingearbeitet. Der Drucker hat keine Möglichkeit, kurzfristig Drucktinten selbst herzustellen.

Verfahren, bei denen Bindemittel verwendet werden, die sowohl in Wasser als auch in den als Lösungsmittel verwendeten niederen Alkoholen in jedem Verhältnis löslich sind oder Emulsionen Bilden, sind bis jetzt noch nicht bekannt geworden oder haben sich zumindest in der Praxis nicht durchgesetzt.

Als Bindemittel und teilweise in der Funktion als Verdickungsmittel, vorzugsweise für die auf Textildruckmaschinen angewendeten Druckpasten, sind wasserlösliche Bindemittel versucht worden und teilweise in Verwendung. Genannt seien hier Alginate, Cellulosederivate, Polyacrylate, Polyvinylpyrrolidon, Polyvinylalkohol, teilverseiftes Polyvinylacetat, Stärkeprodukte, Gelatine, Polyacrylamid, Polyvinylmethylether oder Wasserglas.

Ein Teil dieser Produkte neigt zum Fadenziehen während des Druckens, andere kleben bei Raumtemperatur, wieder andere bilden spröde Filme, die im getrockneten Zustand absplittern. Es kommt zu den gefürchteten Geisterbildern. Einige der Produkte ergeben zwar gute Filme mit guter Haftung, bilden aber eine Sperrschicht für den Farbstoff, wirken somit farbstoffretardierend. Recht gut haben sich Bindemittel auf der Basis Polyvinylalkohol bewährt. Jedoch ist weder mit Polyvinylalkohol noch anderen wäßrig zu lösenden Bindemitteln ein einwandfreies Drucken auf Papiertief-oder Flexodruckmaschinen möglich.

Die Bindemittel für das Thermoumdruckverfahren müssen auf den Maschinen einwandfreies Laufverhalten garantieren. Sie müssen auf den Papieren eine gute Haftung mit guten Reibechtheiten gewährleisten, da beim Auf- und Abrollen der Papiere, auch durch Stoß oder Schlag, es zu Farbstoffabrieb, oder Absplittern der Druckschicht kommen kann. Die Folge sind Geisterbilder nach der Übertragung auf das Substrat, der sogenannten Abriebghosting.

Auch die Wanderung der Farbstoffe im Bindemittel oder vom Bindemittel ins Papier darf während der Lagerung nicht eintreten. Es kommt sonst zu unscharfen Konturen, bei Farbstoffmischungen zu Farbtonverschiebungen, dem sogenannten Migrationsghosting.

Bei den Umdruckbedingungen soll das Bindemittel möglichst keinen Farbstoff zurückhalten, es darf also nicht oder nur geringfügig retardierend wirken.

In der DE-AS 25 20 527 werden wäßrige Drucktinten und Druckpasten für den Transferdruck beschrieben. Mit den dabei verwendeten Bindemitteln/Verdickungsmitteln können nicht in allen Fällen optimale Ergebnisse erhalten werden. Die erfindungsgemäßen Bindemittel gehen aus diesem Stand der Technik nicht hervor.

Als Substrat für das Thermoumdruckverfahren kommen beispielsweise in Betracht: Gewebe, Gewirke und Vliese aus Polyester, Polyacrylnitril, Polyamid, auch entsprechend vorpräparierte Cellulose-Materialien sowie beschichtete Oberflächen aus Polyester, Polyacrylnitril, Polyamid oder andere anfärbbare Materialien.

Der Erfindung liegt die Aufgabe zu Grunde, ein Bindemittel für den Transferdruck aufzuzeigen, mit dem man wäßrige Farbstoffdispersionen für Drucktinten und Druckpasten problemfrei, d.h. ohne die eben erwähnten Nachteile, verarbeiten kann.

Die Aufgabe wird erfindungsgemäß gelöst mit der Verwendung von Copolymerisaten der Zusammensetzung, bezogen auf das Gewicht der Monomeren,

a) 5 bis 95 Gew.-% N-Vinylcaprolactam,

95 bis 5 Gew.-% N-Vinylpyrrolidon und

0 bis 30 Gew.-% eines Alkyl- oder Hydroxyalkylesters der Acrylsäure oder Methacrylsäure mit 1 bis 4 C-Atomen im Alkyl- oder 2 bis 3 C-Atome im Hydroxyalkylrest, eines Vinylesters einer gesättigten Carbonsäure mit 2 bis 3 C-Atomen, Acrylsäure, Methacrylsäure, Maleinsäure oder Itaconsäure, wobei die monomeren Carbonsäuren in Form ihrer Alkali- oder Ammoniumsalze vorliegen, Acrylamid oder Methacrylamid oder Mischungen dieser Monomeren oder

b) 20 bis 80 Gew.-% N-Vinylcaprolactam und

80 bis 20 Gew.-% eines Alkylesters der Acrylsäure oder Methacrylsäure mit 1 bis 14 C-Atomen im Alkyl oder Acrylamid oder Mischungen dieser Monomeren, wobei im Falle eines Alkylesters der Acrylsäure oder Methacrylsäure mit 1 bis 4 C-Atomen im Alkyl als Monomer dieser nur bis zu 30 Gew.-% enthalten ist,

als Bindemittel für den Transferdruck sowie mit der Verwendung der genannten Copolymerisate als Bindemittel in Drucktinten und Druckpasten für den Transferdruck und mit Bindemitteln für den Transferdruck, bestehend aus einem Copolymerisat der Zusammensetzung, bezogen auf das Gewicht der Monomeren,

20 bis 80 Gew.-% N-Vinylcaprolactam und 80 bis 20 Gew.-% eines Alkylesters der Acrylsäure oder Methacrylsäure mit 1 bis 14 C-Atomen im Alkyl oder Acrylamid oder Mischungen dieser Monomeren, wobei im Falle eines Alkylesters der Acrylsäure oder Methacrylsäure mit 1 bis 4 C-Atomen im Alkyl als Monomer dieser nur bis zu 30 Gew.-% enthalten ist.

In dem erfindungsgemäßen Copolymerisat kommen beispielsweise in Betracht als Alkylester der Acrylsäure Methylacrylat, Ethylacrylat, Butylacrylat, Ethylhexylacrylat oder Laurylacrylat,

als Alkylester der Methacrylsäure Ethylmethacrylat oder Butylmethacrylat, als Hydroxyalkylester der Acryl- und Methacrylsäure Hydroxyethylacrylat, Hydroxyethylmethacrylat, Hydroxypropylacrylat oder Hydroxypropylmethacrylat und als Vinylester Vinylacetat oder Vinylpropionat.

Die bevorzugten Bindemittel bestehen aus

```
a)    20 bis 80 Gew.-%    N-Vinylcaprolactam,
      80 bis 20 Gew.-%    N-Vinylpyrrolidon und
       0 bis 30  Gew.-%    eines Alkyl- oder Hydroxyalkylesters der Acrylsäure mit 1 bis 8 C-Atomen im Alkyl- und 2 bis
                           3 C-Atomen im Hydroxyalkylrest, Vinylacetat,
                           Vinylpropionat, Acrylamid oder Mischungen dieser
                           Monomeren oder
b)    30 bis 60 Gew.-%    N-Vinylcaprolactam und
      70 bis 40 Gew.-%    Acrylamid.
```

Für die praktische Anwendung sind davon ganz besonders bevorzugt Copolymerisate aus
20 bis 80 Gew.-% N-Vinylcaprolactam und
80 bis 20 Gew.-% N-Vinylpyrrolidon
Für die unter a) ggfs. zusätzlich enthaltenen Monomeren sind Mengen von 5 bis 25 Gew.-% bevorzugt.

Die erfindungsgemäßen Bindemittel sind in Wasser und niedrigen aliphatischen Alkoholen vollständig löslich oder bilden insbesondere bei Raumtemperaturen stabile Emulsionen in diesen Lösungsmitteln, insbesondere wenn hydrophobe Monomere eingebaut sind.

Die Copolymerisate werden in an sich üblicher Weise beispielsweise durch Lösungspolymerisation in Gegenwart eines Radikal-Initiators und ggfs. in Gegenwart eines Reglers hergestellt. Zweckmäßigerweise verwendet man für die Polymerisation solche Lösungsmittel, daß die erhaltenen Polymerisatlösungen direkt oder ggfs. nach Verdünnung der erfindungsgemäßen Verwendung zugeführt werden können.

Die Copolymerisate weisen K-Werte von 15 bis 50 auf, wobei der K-Wert an einer 1-gew.-%igen Lösung in Tetrahydrofuran oder Wasser bei 25 °C nach Fikentscher bestimmt wird. Die bevorzugten K-Werte bei der Verwendung als Bindemittel in Drucktinten liegen bei 25 bis 35 und bei der Verwendung in Druckpasten bei 30 bis 40. Die 30 gew.-%ige Lösung eines erfindungsgemäßen Bindemittels in einem Wasser-Ethanol-Gemisch im Verhältnis 70 bis 95 Gew.-Teile Wasser und 5 bis 30 Gew.-Teile Ethanol, verdünnt mit Wasser im Verhältnis 1 : 4, bezogen auf das Gewicht, soll eine Viskosität entsprechend einer Auslaufzeit aus dem DIN-Becher vom Durchmesser 4 mm bei 23 °C von 15 bis 30 sec aufweisen.

Drucktinten enthalten 0,1 bis 30 Gew.-%, bevorzugt 0,5 bis 20 Gew.-%, Druckpasten 1,5 bis 30 Gew.-%, bevorzugt 7 bis 20 Gew.-%, erfindungsgemäßes Bindemittel. Dabei werden die neuen Bindemittel zweckmäßig in Form ihrer wäßrigen, wäßrig-alkoholischen oder rein alkoholischen Lösungen oder Emulsionen eingesetzt.

Eine vorteilhafte Zusammensetzung für eine Drucktinte enthält
0,1 bis 30, bevorzugt 0,5 bis 20 Gew.-% erfindungsgemäßes Bindemittel,
0,1 bis 30, bevorzugt 1 bis 15 Gew.-% Dispersionsfarbstoff in Form einer üblichen, wäßrigen 30 bis 50 gew.-%igen Formulierung, bezogen auf Farbstoff,
0,1 bis 10 Gew.-% Zusätze an Hilfsmitteln,
20 bis 96 Gew.-%, bevorzugt 90 bis 60 Gew.-% niederen Alkohols als Lösungsmittel und
0 bis 30, bevorzugt 1 bis 10 Gew.-% Wasser.

Eine zweckmäßige und vorteilhafte Zusammensetzung für eine Druckpaste enthält

| | |
|---|---|
| 1,5 bis 30, | bevorzugt 7 bis 20 Gew.-% erfindungsgemäßes Bindemittel, |
| 0,5 bis 5,0, | bevorzugt 1,5 bis 2,5 Gew.-% Verdicker, |
| 0,1 bis 30 Gew.-% | Dispersionsfarbstoff in Form einer üblichen, wäßrigen 30 bis 50 gew.-%igen Formulierung, |
| ggf. 0,05 bis 1,0 Gew.-% | Zusätze an Hilfsmitteln und |
| Rest zu 100 Gew% | Wasser. |

Hierzu sei erläutert:
Es können die üblichen, handelsüblichen wäßrigen Zubereitungen von Dispersionsfarbstoffen verwendet werden, wie sie jedem Fachmann bekannt sind, solche Dispersionsfarbstoffe in Form von wäßrigen Dispersionen für Drucktinten oder Druckpasten werden beispielsweise in der DE-AS 25 20 527 beschrieben.

Bevorzugt werden die erfindungsgemäßen Bindemittel eingesetzt in Form 25-bis 50- gew.-%iger wäßriger, alkoholischer oder wäßrig-alkoholischer Lösungen. Als niedere Alkohole kommen insbesondere

EP 0 252 390 B1

Ethanol, n-Propanol und i-Propanol in Betracht.

Hilfsmittelzusätze bei Drucktinten sind vor allem Trocknungsverzögerer, insbesondere mehrwertige Alkohole, wie Glykole, Glycerin, Ethylenglykol, Propylenglykol, Glykolether, die in Mengen bis 10 Gew.-% eingesetzt werden können.

Weiterhin beispielsweise Egalisiermittel und Laufverbesserungsmittel, wie z.B. oxalkylierte Diamine in Mengen bis zu 10%, oder auch Zusätze, wie silikonfreie handelsübliche Entschäumer, Dispergiermittel, Emulgatoren, von denen beispielsweise zu nennen sind das Na-Salz des Ligninsulfonats aber auch nichtionische Emulgatoren verschiedener Provenienz in Mengen bis zu 3 %

Als alkoholische Lösungsmittel haben sich bei den Drucktinten insbesondere Ethanol, n-Propanol und i-Propanol bewährt.

Die Druckpasten enthalten üblicherweise ein Verdickungsmittel. Im Prinzip können die im Textildruck verwendeten, literaturbekannten Verdickungsmittel verwendet werden, sofern sie nicht farbstoffagglomerierend wirken. Sehr gut geeignet sind die bekannten synthetischen Verdickungsmittel auf der Basis hochmolekularer, meist teilvernetzter Polysäuren, wie z.B. Polyacrylsäure, Mischpolymere der Acrylsäure und/oder Maleinsäure, Acrylsäure-Acrylamid-Copolymere, mit Molgemischen von 500 000 bis 3 Millionen. Sie werden in der Regel in Form ihrer Alkalisalze vorzugsweise der Ammonsalze eingesetzt.

Zusätzliche Hilfsmittel für Druckpasten sind z.B. insbesondere silikonfreie Entschäumer sowie Ethylenglykol als Trocknungsverzögerer.

Die obengenannten Zusammensetzungen weisen die für eine vorteilhafte Anwendung geforderten Viskositäten auf, bzw. diese können bei Drucktinten durch Lösungsmittel oder bei Druckpasten durch Variieren der Menge an Verdickungsmitteln oder der Wassermenge leicht eingestellt werden.

Die erfindungsgemäßen Bindemittel bewirken eine gute Haftung auf den bedruckten Papieren, sie sind elastisch genug, um nicht abzusplittern und besitzen eine gute Abriebfestigkeit. Die Lagerstabilität der Papiere ist sehr gut und der Farbstofftransfer vom Papier auf das Substrat ist ausgezeichnet. Die Bindemittel wirken nur unwesentlich retardierend. Das gleiche gilt aufgrund der erwähnten Eigenschaften für den Abrieb- und Migrationsghosting. Die Bindemittel wirken also gleichzeitig als Sperrschicht für die Farbstoffmoleküle bei der Lagerung der bedruckten Papiere. Beim Umdrucken unter dem Einfluß hoher Temperaturen können die Farbstoffmoleküle fast vollständig aus diesem als Sperrschicht fungierenden Bindemittel diffundieren. Somit sind unter den normalen Thermoumdruckbedingungen einwandfreie Umdrucke mit hervorragender Farbstoffwiedergabe möglich. Die erfindungsgemäßen Bindemittel weisen ein vorteilhaftes thermoplastisches Verhalten auf, das bei den Umdrucktemperaturen eine leicht klebrige Oberfläche bewirkt, so daß Friktionen zwischen Transferpapier und zu bedruckendem Substrat verhindert werden.

In den Beispielen sind Teile Gewichtsteile, die Prozentangaben beziehen sich auf das Gewicht. Die K-Werte werden in 1 gew.-%iger Tetrahydrofuranlösung oder in Wasser bei 25 °C bestimmt.

Beispiel 1

```
300 Gew.-Teile einer 30 %igen Lösung eines Mischpolymerisates
            aus 70 % Vinylcaprolactam und 30 % Vinylpyrrolidon
            in Wasser/Ethanol (80:20) mit einem K-Wert von 33,
            bestimmt in 1 gew.-%iger Tetrahydrofuranlösung bei 25°C.
100 Gew.-Teile Ethylenglykol und
600 Gew.-Teile Ethylalkohol werden gemischt.
1000 Gew.-Teile
```

```
Zu 500 Gew.-Teilen dieser Mischung gibt man unter leichtem Rühren
200 Gew.-Teile einer 50 %igen, wäßrigen Anteigung von Disperse red 60
            (C.I. 60756) und
300 Gew.-Teile Ethylalkohol
1000 Gew.-Teile
```

5

Mit dieser Drucktinte bedruckt man auf einer Tiefdruckmaschine ein Transferpapier. Das Papier hat eine sehr gute Lagerstabilität und ergibt beim Thermoumdruck während 25 sec. und 210°C einen ausgezeichneten farbtiefen und konturenscharfen roten Umdruck auf einer Polyesterwirkware.

Beispiel 2

```
300 Gew.-Teile einer 35 %igen Lösung eines Mischpolymerisates aus
               60 % Vinylcaprolactam, 30 % Vinylpyrrolidon und
               10 % Hydroxipropylacrylat in Wasser/i-Propanol (85:15) mit
               einem K-Wert von 36, bestimmt in 1 gew.-%iger wäßriger
               Lösung bei 25°C
 40 Gew.-Teile Propylenglykolmonomethylether
660 Gew.-Teile Isopropanol werden gemischt.
1000 Gew.-Teile
```

```
Zu 500 Gew.-Teilen dieser Mischung gibt man unter leichtem Rühren
  220 Gew.-Teile einen 40 %igen, wäßrigen Anteigung von Disperse blue 72
                 (C.I. 60725) und
  280 Gew.-Teile Ethylalkohol
 1000    Gew.-Teile
```

Mit dieser Drucktinte bedruckt man auf einer Flexodruckmaschine ein Transferpapier. Das Papier zeichnet sich aus durch eine sehr gute Lagerstabilität. Beim Umdruck während 30 sec. bei 210°C erhält man ein konturenscharfes, farbtiefes blaudes Druckbild auf einem Polyester-Gewebe.

Beispiel 3

Drucktinte gemäß Beispiel 2, wobei als Bindemittel

300 Gew.-Teile einer 30 %igen Lösung eines Mischpolymerisates bestehend aus 60 % Vinylcaprolactum und 40 % Acrylamid, vom K-Wert 38, bestimmt in 1 gew.-%iger, wäßriger Lösung bei 25°C, in Wasser/Ethanol (85:15) verwendet wurden.

Beispiel 4

Drucktinte gemäß Beispiel 2, wobei als Bindemittel

300 Gew.-Teile einer 30 %igen Lösung eines Mischpolymerisates bestehend aus 60 % Vinylcaprolactam, 25 % Vinylpyrrolidon une 15 % Ethylhexylacrylat, vom K-Wert 39, bestimmt in 1 gew.-%ger Tetrahydrofuranlösung bei 25°C, in Wasser/Ethanol (85:15) verwendet wurden.

Beispiel 5

Drucktinte gemäß Beispiel 2, wobei als Bindemittel

300 Gew.-Teile einer 30 %igen Lösung eines Mischpolymerisates aus 52 % Vinylcaprolactam, 23 % Vinylpyrrolidon und 25 % Vinylacetat in Wasser/Ethanol (85:15) vom K-Wert 37, bestimmt in 1 gew.-%iger Tetrahydrofuranlösung bei 25°C verwendet wurden.

Beispiele für Druckpasten

Beispiel 6

```
In
921,5 Gew.-Teile Wasser werden nacheinander eingerührt:
    7,5 Gew.-Teile eines Ethylen-Maleinsäure-Mischpolymerisates
                         (Molgew. über 500 000)
   10,0 Gew.-Teile einer 25 %igen wäßrigen Ammoniaklösung
      1 Gew.-Teil  einer 5 %igen Lösung von Monostearylphosphat in
                         Citronensäure-tris-i-nonylester als Entschäumermischung
     60 Gew.-Teile einer 30 %igen Lösung eines Mischpolymerisates aus
                         60 % Vinylcaprolactam, 25 % Vinylpyrrolidon und
                         15 % Vinylpropionat in Wasser/i-Propanol (80:20)
                         mit einem K-Wert von 36, bestimmt in 1 gew.-%iger
                         Tetrahydrofuranlösung bei 25°C.
   1000 Gew.-Teile


Zu 850 Gew.-Teilen dieser binderhaltigen Verdickung gibt man
    150 Gew.-Teile  einer 30 %igen, wäßrigen Zubereitung von Disperse
                         yellow 181
   1000 Gew.-Teile
```

Man erhält eine Druckpaste mit der auf einer Rotationsfilmdruckmaschine ein Transferpapier bedruckt wird. Das Papier zeigt gute Abriebfestigkeit und hat eine sehr gute Lagerstabilität. Im Umdruckverfahren erhält man auf einem mit einer Polyvinylchlorid-Schicht überzogenen Weißblech ein einwandfreies, konturenscharfes, farbtiefes, gelbes Druckbild, wenn bei einer Temperatur von 205°C während 45 sec. gearbeitet wird.

Beispiel 7

```
     35 Gew.-Teile einer 30 %igen wäßrigen Anteigung eines mit Ammoniak
                         neutralisierten, teilvernetzten hochmolekularen
                         Mischpolymerisates aus 90 % Acrylsäure und 10 % Acrylamid
     60 Gew.-Teile einer 32 %igen Lösung eines Mischpolymerisates aus
                         60 % Vinylcaprolactam, 25 % Vinylpyrrolidon und
                         15 % Butylacrylat vom K-Wert 45, bestimmt in 1 gew.-%iger
                         Tetrahydrofuranlösung bei 25°C, in Wasser/Ethanol (85:15), und
      2 Gew.-Teile Äthylhexansäure umgesetzt mit 3 Propylenoxid, als
                         Entschäumer, wurden nacheinander in
    903 Gew.-Teile Wasser eingerührt.
   1000 Gew.-Teile
```

Man erhält eine binderhaltige Verdickung.

150 Gew.-Teile eines 30 %igen, wäßrigen Farbstoffteiges

von Disperse red 11 (C.I. 62015) vermischt man mit

850 Gew.-Teile dieser binderhaltigen Verdickung

1000 Gew.-Teile

Mit der so erhaltenen Druckpaste bedruckt man auf einer Flachfilmdruckmaschine ein Transferpapier. Das Papier hat eine sehr gute Lagerfähigkeit. Man erhält damit nach dem Umdrucken während 30 sec. bei 200 ° C einen scharf stehenden, farbtiefen Druck auf einem Polyamidgewebe.

Beispiel 8

80 Gew.-Teile einer 5 %igen, wäßrigen Anteigung einer mit Ammoniak neutralisierten, teilvernetzten, hochmolekularen Polyacrylsäure mit einem Molgewicht von 2,5 bis 3 Millionen.

90 Gew.-Teile einer 30 %igen Lösung eines Mischpolymerisates aus 70 % Vinylcaprolactam, 15 % Vinylpyrrolidon, 12 % Ethylacrylat und 3 % Hydroxiethylacrylat vom K-Wert 40 - 45, bestimmt in 1 gew.-%iger Tetrahydrofuranlösung bei 25°C, in Wasser/1-Propanol (80:20) und

2 Gew.-Teile eines mit 3 Propylenoxid umgesetzten Ethylhexanols werden nacheinander in

828 Gew.-Teile Wasser eingerührt.

1000 Gew.-Teile

Zu 840 Gew.-Teile dieser binderhaltigen Verdickung gibt man unter Rühren

160 Gew.-Teile einer 30 %igen, wäßrigen Anteigung von Disperse blue 347

1000 Gew.-Teile

Nach dem Umdrucken auf ein Triacetat-Gewebe während 30 sec. bei 210 ° C erhält man ein farbtiefes, türkisfarbenes, scharf stehendes Druckbild.

Herstellungsbeispiele

Beispiel 1

In einem 2 l Reaktionskolben ausgestattet mit Rührer, Thermometer und Rückflußkühler, werden als Vorlage eine Mischung von

| 3 | Teilen Azo-bis-(isobutyronitril) |
| 138,5 | Teilen Ethanol |
| 210 | Teilen N-Vinylcaprolactam |
| 90 | Teilen N-Vinylpyrrolidon |
| 196,4 | Teilen vollentsalztem Wasser und |
| 4,5 | Teilen Buten-1-ol-3 (als Regler) |

unter Rühren auf Rückflußtemperatur erhitzt und 4 Stunden lang bei Rückflußtemperatur gehalten.

Anschließend wird der Ansatz abgekühlt und gleichzeitig werden zur Verdünnung der erhaltenen Polymerlösung 357,6 Teile vollentsalztes Wasser innerhalb von 1 Stunde zugeben. Es wird noch 3 Stunden gerührt, um eine homogene Lösung zu erhalten.

Man erhält eine 30 %ige Lösung eines Mischpolymerisates und 70 % N-Vinylcaprolactam und 30 % N-Vinylpyrrolidon in Wasser/Ethanol (80:20) mit einem K-Wert von 33, bestimmt in 1 Gew.-%iger Tetrahydrofuranlösung bei 25°C, die direkt verwendet werden kann.

Beispiel 2

Gemäß Beispiel 1 wird eine Mischung von

| | |
|---|---|
| 3,5 | Teilen Azo-bis(isobutyronitril) |
| 96,2 | Teilen iso-Propanol |
| 210 | Teilen N-Vinylcaprolactam |
| 105 | Teilen N-Vinylpyrrolidon |
| 35 | Teilen 2-Hydroxypropylacrylat |
| 294,6 | Teilen vollentsalztem Wasser und |
| 5,3 | Teilen Buten-1-ol-3 |

polymerisiert und zu der erhaltenen Polymerlösung beim Abkühlen 250,4 Teile vollentsalztes Wasser zugegeben und noch 3 Stunden gerührt.

Man erhält eine 35 %ige Lösung eines Mischpolymerisates aus
60 % N-Vinylcaprolactam, 30 % N-Vinylpyrrolidon und
10 % 2-Hydroxypropylacrylat in Wasser/iso-Propanol (85:15) mit einem K-Wert von 36, bestimmt in 1 gew.-%iger, wäßriger Lösung bei 25°C.

Beispiel 3

Es wird eine Mischung aus

| | |
|---|---|
| 3 | Teilen Azo-bis(isobutyronitril) |
| 103,9 | Teilen Ethanol |
| 180 | Teilen N-Vinylcaprolactam |
| 240 | Teilen Acrylamidlösung, 50 %ig in Wasser |
| 111 | Teilen vollentsalztem Wasser und |
| 4,5 | Teilen Buten-1-ol-3 |

hergestellt.

In einem 2 l Reaktionskolben, ausgestattet mit Rührer, Thermometer und Rückflußkühler, werden 130 Teile dieser Mischung unter Rühren auf Rückflußtemperatur erhitzt und der Rest der Mischung innerhalb von 1 Stunde zugefahren. Zum Auspolymerisieren wird der Ansatz noch 3 Stunden lang bei Rückflußtemperatur gehalten.

Anschließend wird gekühlt und gleichzeitig werden 357,6 Teile vollentsalztes Wasser innerhalb von 1 Stunde zugegeben. Anschließend wird der Ansatz noch 3 Stunden lang gerührt.

Man erhält eine 30 %ige Lösung eines Mischpolymerisates aus
60 % Vinylcaprolactam und 40 % Acrylamid in Wasser/Ethanol (85:15) mit einem K-Wert von 38, bestimmt in 1 gew.-%iger, wäßriger Lösung bei 25°C.

Beispiel 4

Gemäß Beispiel 1 wird eine Mischung von

| | |
|---|---|
| 3 | Teilen Azo-bis(isobutyronitril) |
| 103,9 | Teilen Ethanol |
| 180 | Teilen N-Vinylcaprolactam |
| 75 | Teilen N-Vinylpyrrolidon |
| 45 | Teilen 2-Ethylhexylacrylat |
| 231 | Teilen vollentsalztem Wasser und |
| 4,5 | Teilen Buten-1-ol-3 |

polymerisiert und zu der erhaltenen Polymerlösung beim Abkühlen 357,6 Teile vollentsaltes Wasser zugegeben und noch 3 Stunden gerührt.

Man erhält eine 30 %ge Lösung eines Mischpolymerisates aus
60 % N-Vinylcaprolactam, 25 % N-Vinylpyrroldion und

15 % 2-Ethylhexylacrylat in Wasser/Ethanol (85:15) mit einem K-Wert von 39, bestimmt in 1 gew.-%iger Tetrahydrofuranlösung bei 25° C

Beispiel 5

Gemäß Beispiel 1 wird als Vorlage eine Mischung von

| | |
|---|---|
| 3 | Teilen Azo-bis(isobutyronitril) |
| 103,9 | Teilen Ethanol |
| 156 | Teilen N-Vinylcaprolactam |
| 69 | Teilen N-Vinylpyrrolidon |
| 75 | Teilen Vinylacetat |
| 231 | Teilen vollentsalztem Wasser und |
| 4,5 | Teilen Buten-1-ol-3 |

polymerisiert und zu der erhaltenen Polymerlösung beim Abkühlen 357,6 Teile vollentsalztes Wasser zugegeben und noch 3 Stunden gerührt.

Man erhält eine 30 %ige Lösung eines Mischpolymerisats aus 52 % N-Vinylcaprolactam, 23 % N-Vinylpyrrolidon und 25 % Vinylacetat in Wasser/Ethanol (85:15) mit einem K-Wert von 37, bestimmt in 1 gew.-%iger Tetrahydrofuranlösung bei 25° C.

Beispiel 6

Gemäß Beispiel 1 wird eine Mischung von

| | |
|---|---|
| 3 | Teilen Azo-bis(isobutyronitril) |
| 139,4 | Teilen iso-Propanol |
| 180 | Teilen N-Vinylcaprolactam |
| 75 | Teilen N-Vinylpyrrolidon |
| 45 | Teilen Vinylpropionat und |
| 200 | Teilen vollentsalztem Wasser |

polymerisiert und zu der erhaltenen Polymerlösung beim Abkühlen 357,6 Teile vollentsalztes Wasser zugegeben und noch 3 Stunden gerührt.

Man erhält eine 30 %ige Lösung eines Mischpolymerisates aus 60 % N-Vinylcaprolactam, 25 % N-Vinylpyrrolidon und 15 % Vinylpropionat in Wasser/iso-Propanol (80:20) mit einem K-Wert von 36, bestimmt in 1 gew.-%iger Tetrahydrofuranlösung bei 25° C.

Beispiel 7

Gemäß Beispiel 1 wird eine Mischung von

| | |
|---|---|
| 3,2 | Teilen Azo-bis(isobutyronitril) |
| 101,2 | Teilen Ethanol |
| 192 | Teilen N-Vinylcaprolactam |
| 80 | Teilen N-Vinylpyrrolidon |
| 48 | Teilen n-Butylacrylat |
| 258,4 | Teilen vollentsalztem Wasser und |
| 2,4 | Teilen Buten-1-ol-3 |

polymermerisiert und zu der erhaltenen Polymerlösung beim Abkühlen 314,8 Teile vollentsalztes Wasser zugegeben und noch 3 Stunden gerührt.

Man erhält eine 32 %ige Lösung eines Mischpolymerisates aus 60 % N-Vinylcaprolactam, 25 % N-Vinylpyrrolidon und 15 % n-Butylacrylat in Wasser/Ethanol (85:15) mit einem K-Wert von 45, bestimmt in 1 gew.-%iger Tetrahydrofuranlösung bei 25° C.

Beispiel 8

Gemäß Beispiel 1 wird eine Mischung von

| 3 | Teilen Azo-bis(isobutyronitril) |
|---|---|
| 139,4 | Teilen iso-Propanol |
| 210 | Teilen N-Vinylcaprolactam |
| 45 | Teilen N-Vinylpyrrolidon |
| 36 | Teilen Ethylacrylat |
| 9 | Teilen 2-Hydroxyethylacrylat und |
| 200 | Teilen vollentsalztem Wasser |

polymerisiert und zu der erhaltenen Polymerlösung beim Abkühlen 357,6 Teile vollentsalztes Wasser zugegeben und noch 3 Stunden gerührt.

Man erhält eine 30 %ige Lösung eines Mischpolymerisates aus
70 % N-Vinylcaprolactam, 15 % N-Vinylpyrrolidon,
12 % Ethylacrylat und 3 % 2-Hydroxyethylacrylat in Wasser/iso-Propanol (80:20) mit einem K-Wert von 40-45, bestimmt in 1 gew.-%iger Tetrahydrofuranlösung bei 25° C.

**Patentansprüche**

1. Verwendung von Copolymerisaten der Zusammensetzung, bezogen auf das Gewicht der Monomeren,

   a) 5 bis 95 Gew.-% N-Vinylcaprolactam,
   95 bis 5 Gew.-% N-Vinylpyrrolidon und
   0 bis 30 Gew.-% eines Alkyl- oder Hydroxyalkylesters der Acrylsäure oder Methacrylsäure mit 1 bis 14 C-Atomen im Alkyl- oder 2 bis 3 C-Atome im Hydroxyalkylrest, eines Vinylesters einer gesättigten Carbonsäure mit 2 bis 3 C-Atomen, Acrylsäure, Methacrylsäure, Maleinsäure oder Itaconsäure, wobei die monomeren Carbonsäuren in Form ihrer Alkali- oder Ammoniumsalze vorliegen, Acrylamid oder Methacrylamid oder Mischungen dieser Monomeren oder
   b) 20 bis 80 Gew.-% N-Vinylcaprolactam und
   80 bis 20 Gew.-% eines Alkylesters der Acrylsäure oder Methacrylsäure mit 1 bis 14 C-Atomen im Alkyl oder Acrylamid oder Mischungen dieser Monomeren, wobei im Falle eines Alkylesters der Acrylsäure oder Methacrylsäure mit 1 bis 4 C-Atomen im Alkyl als Monomer dieser nur bis zu 30 Gew.-% enthalten ist,

   als Bindemittel für den Transferdruck.

2. Verwendung nach Anspruch 1, dadurch gekennzeichnet, daß man Copolymerisate der Zusammensetzung, bezogen auf das Gewicht der Monomeren,

   a) 20 bis 80 Gew.-% N-Vinylcaprolactam,
   80 bis 20 Gew.-% N-Vinylpyrrolidon und
   0 bis 30 Gew.-% eines Alkyl- oder Hydroxyalkylesters der Acrylsäure mit 1 bis 8 C-Atomen im Alkyl-und 2 bis 3 C-Atomen im Hydroxyalkylrest, Vinylacetat, Vinylpropionat, Acrylamid oder Mischungen dieser Monomeren

   oder

   b) 30 bis 60 Gew.-% N-Vinylcaprolactam und
   70 bis 40 Gew.-% Acrylamid

   einsetzt.

3. Verwendung nach Anspruch 1 oder 2, dadurch gekennzeichnet, daß man die Copolymerisate als Bindemittel in Drucktinten und Druckpasten für den Transferdruck in einer Menge von 0,1 bis 30 Gew.-%, bezogen auf das Gesamtgewicht, einsetzt.

4. Verwendung nach Anspruch 3, dadurch gekennzeichnet, daß man die Copolymerisate in Drucktinten für den Transferdruck in einer Menge von 0,5 bis 20 Gew.-%, bezogen auf das Gesamtgewicht, und in Druckpasten in einer Menge von 1,5 bis 30 Gew.-%, bezogen auf das Gesamtgewicht, einsetzt.

5. Drucktinten und Druckpasten für den Transferdruck, enthaltend 0,1 bis 30 Gew.-%, bezogen auf das Gesamtgewicht, eines Copolymerisats der Zusammensetzung, bezogen auf das Gewicht der Monomeren,

a) 5 bis 95 Gew.-% N-Vinylcaprolactam,
95 bis 5 Gew.-% N-Vinylpyrrolidon und
0 bis 30 Gew.-% eines Alkyl- oder Hydroxyalkylesters der Acrylsäure oder Methacrylsäure mit 1 bis 14 C-Atomen im Alkyl- oder 2 bis 3 C-Atome im Hydroxyalkylrest, eines Vinylesters einer gesättigten Carbonsäure mit 2 bis 3 6-Atomen, Acrylsäure, Methacrylsäure, Maleinsäure oder Itaconsäure, wobei die monomeren Carbonsäuren in Form ihrer Alkali- oder Ammoniumsalze vorliegen, Acrylamid oder Methacrylamid oder Mischungen dieser Monomeren oder
b) 20 bis 80 Gew.-% N-Vinylcaprolactam und
80 bis 20 Gew.-% eines Alkylesters der Acrylsäure oder Methacrylsäure mit 1 bis 14 C-Atomen im Alkyl oder Acrylamid oder Mischungen dieser Monomeren, wobei im Falle eines Alkylesters der Acrylsäure oder Methacrylsäure mit 1 bis 4 C-Atomen im Alkyl als Monomer dieser nur bis zu 30 Gew.-% enthalten ist.

6. Bindemittel für den Transferdruck, bestehend aus einem Copolymerisat der Zusammensetzung, bezogen auf das Gewicht der Monomeren,

20 bis 80 Gew.-% N-Vinylcaprolactam und
80 bis 20 Gew.-% eines Alkylesters der Acrylsäure oder Methacrylsäure mit 1 bis 14 C-Atomen im Alkyl oder Acrylamid oder Mischungen dieser Monomeren, wobei im Falle eines Alkylesters der Acrylsäure oder Methacrylsäure mit 1 bis 4 C-Atomen im Alkyl als Monomer dieser nur bis zu 30 Gew.-% enthalten ist.

## Claims

1. Use of a copolymer of the composition, based on the weight of the monomers,
   a) 5-95% by weight of N-vinylcaprolactam,
   95-5% by weight of N-vinylpyrrolidone and
   0-30% by weight of an alkyl ester or hydroxyalkyl ester of acrylic acid or methacrylic acid where alkyl is of 1 to 14 carbon atoms or hydroxyalkyl is of 2 or 3 carbon atoms, of a vinyl ester of a saturated carboxylic acid of 2 or 3 carbon atoms, acrylic acid, methacrylic acid, maleic acid or itaconic acid, the monomeric carboxylic acids being in the form of their alkali metal or ammonium salts, acrylamide or methacrylamide, or mixtures of these monomers, or
   b) 20-80% by weight of N-vinylcaprolactam
   and
   80-20% by weight of an alkyl ester of acrylic acid or methacrylic acid where alkyl is of 1 to 14 carbon atoms or acrylamide, or mixtures of these monomers, where if the monomer is an alkyl ester of acrylic acid or methacrylic acid where alkyl is of 1 to 4 carbon atoms, it is present in an amount of not more than 30% by weight,
   as a binder for transfer printing.

2. Use as claimed in claim 1 of a copolymer of the composition, based on the weight of the monomers,
   a) 20-80% by weight of N-vinylcaprolactam,
   80-20% by weight of N-vinylpyrrolidone and
   0-30% by weight of an alkyl or hydroxyalkyl ester of acrylic acid, where alkyl is of 1 to 8 carbon atoms and hydroxyalkyl is of 2 or 3 carbon atoms, vinyl acetate, vinyl propionate, acrylamide or mixtures of these monomers, or
   b) 30-60% by weight of N-vinylcaprolactam and
   70-40% by weight of acrylamide.

3. Use as claimed in claim 1 or 2, wherein the copolymer is used as a binder in printing inks and print pastes for transfer printing in an amount of from 0.1 to 30% by weight, based on the total weight.

4. Use as claimed in claim 3, wherein the copolymer is used in printing inks for transfer printing in an amount of from 0.5 to 20% by weight, based on the total weight, and in print pastes in an amount of from 1.5 to 30% by weight, based on the total weight.

**5.** A printing ink or print paste for transfer printing containing from 0.1 to 30% by weight, based on the total weight, of a copolymer of the composition, based on the weight of the monomers,

a) 5-95% by weight of N-vinylcaprolactam,

95-5% by weight of N-vinylpyrrolidone and

0-30% by weight of an alkyl ester or hydroxyalkyl ester of acrylic acid or methacrylic acid where alkyl is of 1 to 14 carbon atoms or hydroxyalkyl is of 2 or 3 carbon atoms, of a vinyl ester of a saturated carboxylic acid of 2 or 3 carbon atoms, acrylic acid, methacrylic acid, maleic acid or itaconic acid, the monomeric carboxylic acids being in the form of their alkali metal or ammonium salts, acrylamide or methacrylamide, or mixtures of these monomers, or

b) 20-80% by weight of N-vinylcaprolactam

and

80-20% by weight of an alkyl ester of acrylic acid or methacrylic acid where alkyl is of 1 to 14 carbon atoms or acrylamide, or mixtures of these monomers, where if the monomer is an alkyl ester of acrylic acid or methacrylic acid where alkyl is of 1 to 4 carbon atoms, it is present in an amount of not more than 30% by weight.

**6.** A binder for transfer printing consisting of a copolymer of the composition, based on the weight of the monomers,

20-80% by weight of N-vinylcaprolactam and

80-20% by weight of an alkyl ester of acrylic acid or methacrylic acid where alkyl is of 1 to 14 carbon atoms or acrylamide, or mixtures of these monomers, where if the monomer is an alkyl ester of acrylic acid or methacrylic acid where alkyl is of 1 to 4 carbon atoms, it is present in an amount of not more than 30% by weight.

**Revendications**

**1.** Utilisation à titre de liants pour l'impression par transfert ou décalcomanie, de copolymères de la composition suivante, rapportée au poids des monomères,

a) 5 à 95% en poids de N-vinylcaprolactame,

95 à 5% en poids de N-vinylpyrrolidone et

0 à 30% en poids d'un ester alkylique ou hydroxyalkylique de l'acide acrylique ou de l'acide méthacrylique, dont le radical alkyle comporte de 1 à 14 atomes de carbone ou dont le radical hydroxyalkyle comporte 2 ou 3 atomes de carbone, d'un ester vinylique d'un acide carboxylique insaturé comportant 2 ou 3 atomes de carbone, d'acide acrylique, d'acide méthacrylique, d'acide maléique ou d'acide itaconique, où les acides carboxyliques monomériques se présentent sous forme de leurs sels de métaux alcalins ou d'ammonium, d'acrylamide ou de méthacrylamide, ou de mélanges de ces monomères, ou

b) 20 à 80% en poids de N-vinylcaprolactame et 80 à 20% en poids d'un ester alkylique de l'acide acrylique ou méthacrylique dont le radical alkyle comporte de 1 à 14 atomes de carbone, ou d'acrylamide, ou de mélanges de ces monomères, où, dans le cas d'un ester alkylique de l'acide acrylique ou de l'acide méthacrylique dont le radical alkyle comporte de 1 à 4 atomes de carbone à titre de monomère, celui-ci n'est présent qu'à raison de jusqu'à 30% en poids seulement.

**2.** Procédé suivant la revendication 1, caractérisé en ce que l'on met en oeuvre des copolymères de la composition suivante, rapportée au poids des monomères,

a) 20 à 80% en poids de N-vinylcaprolactame,

80 à 20% en poids de N-vinylpyrrolidone et

0 à 30% en poids d'un ester alkylique ou hydroxyalkylique de l'acide acrylique dont le radical alkyle comporte de 1 à 8 atomes de carbone et le radical hydroxyalkyle comporte 2 ou 3 atomes de carbone, d'acétate de vinyle, de propionate de vinyle, d'acrylamide ou de mélanges de ces monomères,

ou

b) 30 à 60% en poids de N-vinylcaprolactame et

70 à 40% en poids d'acrylamide.

**3.** Utilisation suivant la revendication 1 ou 2, caractérisée en ce que l'on met en oeuvre les copolymères à titre de liants dans des encres d'impression et des pâtes d'impression pour l'impression par transfert ou décalcomanie, en une proportion de 0,1 à 30% en poids, par rapport au poids total.

4. Utilisation suivant la revendication 3, caractérisée en ce que l'on met en oeuvre les copolymères dans des encres d'impression pour l'impression par transfert ou décalcomanie, en une proportion de 0,5 à 20% en poids, par rapport au poids total et dans des pâtes d'impression en une proportion de 1,5 à 30% en poids, par rapport au poids total.

5. Encres d'impression et pâtes d'impression pour l'impression par transfert ou décalcomanie, qui contiennent de 0,1 à 30% en poids, par rapport au poids total, d'un copolymère de la composition suivante, rapportée au poids des monomères,

a) 5 à 95% en poids de N-vinylcaprolactame,
95 à 5% en poids de N-vinylpyrrolidone et
0 à 30% en poids d'un ester alkylique ou hydroxyalkylique de l'acide acrylique ou de l'acide méthacrylique, dont le radical alkyle comporte de 1 à 14 atomes de carbone ou dont le radical hydroxyalkyle comporte 2 ou 3 atomes de carbone, d'un ester vinylique d'un acide carboxylique insaturé comportant 2 ou 3 atomes de carbone, d'acide acrylique, d'acide méthacrylique, d'acide maléique ou d'acide itaconique, où les acides carboxyliques monomériques se présentent sous forme de leurs sels de métaux alcalins ou d'ammonium, d'acrylamide ou de méthacrylamide, ou de mélanges de ces monomères, ou
b) 20 à 80% en poids de N-vinylcaprolactame et 80 à 20% en poids d'un ester alkylique de l'acide acrylique ou méthacrylique dont le radical alkyle comporte de 1 à 14 atomes de carbone, ou d'acrylamide, ou de mélanges de ces monomères, où, dans le cas d'un ester alkylique de l'acide acrylique ou de l'acide méthacrylique dont le radical alkyle comporte de 1 à 4 atomes de carbone à titre de monomère, celui-ci n'est présent qu'à raison de jusqu'à 30% en poids seulement.

6. Liant pour l'impression par transfert ou décalcomanie, qui se compose d'un copolymère de la composition suivante, rapportée au poids des monomères,

20 à 80% en poids de N-vinylcaprolactame et
80 à 20% en poids d'un ester alkylique de l'acide acrylique ou de l'acide méthacrylique dont le radical alkyle comporte de 1 à 14 atomes de carbone, ou d'acrylamide, ou de mélanges de ces monomères, où, dans le cas d'un ester alkylique de l'acide acrylique ou de l'acide méthacrylique dont le radical alkyle comporte de 1 à 4 atomes de carbone, à titre de monomère, celui-ci n'est présent qu'à raison de jusqu'à 30% en poids seulement.